# EUROPÄISCHE PATENTSCHRIFT

(11) **EP 2 464 842 B1**
(45) Veröffentlichungstag und Bekanntmachung des Hinweises auf die Patenterteilung: **02.03.2016**
(21) Anmeldenummer: 10728177.6
(22) Anmeldetag: 22.06.2010
(51) Int. Cl.: F02B 37/00, F01K 23/06, F01N 5/02, F02C 1/00

(54) **VORRICHTUNG ZUR UNTERSTÜTZUNG EINER AUFLADEEINRICHTUNG**
DEVICE TO ASSIST A SUPERCHARGER
DISPOSITIF POUR ASSISTER UN COMPRESSEUR DE SURALIMENTATION

(30) Priorität: 12.08.2009 DE 102009028469
(43) Veröffentlichungstag der Anmeldung: 20.06.2012
(73) Patentinhaber: Robert Bosch GmbH, 70442 Stuttgart (DE)
(72) Erfinder: STEGMAIER, Juergen, 71638 Ludwigsburg (DE); CICHON, Martin, 70499 Stuttgart (DE); SCHMITT, Manfred, 64646 Heppenheim (DE); BANZHAF, Bernd, 70563 Stuttgart (DE); SCHMIDT, Achim, 71706 Markgroeningen (DE)
(86) Internationale Anmeldenummer: PCT/EP2010/058777
(87) Internationale Veröffentlichungsnummer: WO 2011/018264

(56) Entgegenhaltungen:
- WO-A2-2007/014942
- DE-A1-102006 057 247
- DE-B1- 2 838 490
- US-A1- 2003 005 696
- US-A1- 2007 277 514
- US-B1- 6 378 308
- "BMW-Vierzylinder nutzt Abwaerme fuer Leistungssteigerung - Motor mit Turbine" AUTO MOTOR UND SPORT, SCW MEDIA VERTRIEBS GMBH, STUTTGART, DE, Nr. 26, 1. Januar 2005 (2005-01-01), Seite 10, XP009138541 ISSN: 0005-0806

## Beschreibung

### Stand der Technik

DE 10 2006 057 247 A1 bezieht sich auf eine Aufladeeinrichtung, bei der über einen Dampfkreis thermische Energie aus dem Abgas einer Verbrennungskraftmaschine entnommen wird und durch eine Turbine teilweise in mechanische und elektrische Energie umgewandelt wird. Nicht genutzte Abwärme wird durch einen separaten Kondensator an die Umgebung abgegeben. Eine Aufladeeinrichtung dient insbesondere zur Aufladung einer Verbrennungskraftmaschine. In einem Abgastrakt befindet sich mindestens ein Abgaswärmetauscher eines Kreislaufes für ein Arbeitsmedium. Dem mindestens einen Abgaswärmetauscher ist ein Förderaggregat im Kreislauf des Arbeitsmediums vorgeschaltet. Der Kreislauf des Arbeitsmediums enthält mindestens eine Expansionsmaschine, über die mindestens ein im Ansaugtrakt der Verbrennungskraftmaschine angeordnetes Verdichterteil angetrieben ist.

DE 28 38 490 zeigt ebenfalls eine Aufladeenrichtung, bei der thermische Energie aus dem Abgas über einen Dampfkreis entnammen wird.

Aus der Zeitschrift "Auto, Motor und Sport", Band 10, Seite 26/2005 ist eine Veröffentlichung bekannt "BMW-Vierzylinder nutzt Abwärme für Leistungssteigerung - Motor mit Turbine". Gemäß dieser Veröffentlichung wandelt eine Verbrennungskraftmaschine etwa zwei Drittel der im Kraftstoff enthaltenen Energie in Abwärme um, die entweder vom Kühlsystem der Verbrennungskraftmaschine aufgenommen oder durch den Abgastrakt der Verbrennungskraftmaschine abgeführt wird. Die bisher ungenutzte Abwärme kann bei Verbrennungskraftmaschinen zur Erhöhung des Wirkungsgrades um bis zu 15% genutzt werden. Dazu ist ein 1,8-Liter-Vierzylindermotor mit einer zweistufig ausgelegten Dampfturbine gekoppelt, welche auf die Kurbelwelle des 1,8-Liter-Vierzylindermotors wirkt. Der Heißdampf wird durch Wärmetauscher erzeugt, die in der Nähe des Auspuffes im Abgastrakt der Verbrennungskraftmaschine untergebracht sind. Mittels eines Wasserkreislaufes kann aus dem Kühlkreislauf der Verbrennungskraftmaschine Kühlfluid abgezweigt werden. Durch den Antrieb der Kurbelwelle über die zweistufig ausgelegte Dampfturbine können entweder die Leistung und das Drehmoment der Verbrennungskraftmaschine gesteigert werden oder der spezifische Kraftstoffverbrauch kann signifikant abgesenkt werden.

### Offenbarung der Erfindung

Der erfindungsgemäß vorgeschlagenen Lösung folgend wird ein Zusatzkreis, der bevorzugt mit Dampf betrieben wird, zwischen dem Abgastrakt und dem Ansaugtrakt einer Verbrennungskraftmaschine vorgeschlagen, in welchem ein Verdichter Teil einer Aufladeeinrichtung vorzugsweise parallel oder auch in Reihe zum Verdichterteil einer vorhandenen Aufladeeinrichtung, vorzugsweise eines Abgasturboladers angeordnet wird. Diese Lösung ist sowohl bei einstufiger als auch bei zweistufiger Aufladung anwendbar. Bei einer zweistufigen Aufladung mit einer Aufladeeinrichtung, die eine Niederdruckstufe und eine Hochdruckstufe umfasst, wird der zusätzliche, über den Zusatzkreis beaufschlagte Verdichterteil bevorzugt parallel zur Hochdruckstufe der bereits vorhandenen Verbrennungskraftmaschine parallel geschaltet, da der Abgasgegendruck des in der Regel am Hochdruckteil angeordneten Waste-Gates abgesenkt werden kann. Dadurch lässt sich der Wirkungsgrad durch eine Verringerung der Ausschiebearbeit der Verbrennungskraftmaschine verbessern.

Der Vorteil des erfindungsgemäß vorgeschlagenen Konzepts ist darin zu sehen, dass einerseits die Leistung der bereits vorhandenen Aufladeeinrichtung, sei es eine ein-, sei es eine zweistufige, erhöht werden kann, wobei es andererseits ebenso gut möglich ist, die Leistung der bereits vorhandenen Aufladeeinrichtung, sei sie ein-, sei sie zweistufig ausgebildet, zu verringern, was z.B. durch Öffnen des Waste-Gates erreicht werden kann. Eine damit einhergehende Verringerung des Abgasgegendrucks führt für die Verbrennungskraftmaschine hinsichtlich deren Wirkungsgrades durch eine Verringerung der Ausschiebearbeit zu einer Verbesserung des Wirkungsgrades.

Wird - wie oben stehend bereits erwähnt - eine Absenkung des Abgasgegendrucks durch Öffnen des Waste-Gates der Aufladeeinrichtung, die bevorzugt als Abgasturbolader ein- oder zweistufig ausgebildet ist, vorgenommen, kann damit einhergehend bei Aufrechterhaltung des Ladedrucks weniger oder gar kein Abgas im Rahmen der Abgasrückführung in den Ansaugtrakt der Verbrennungskraftmaschine zurückgeführt werden. Zur Beibehaltung oder Erhöhung der Abgasrückführungsrate wird eine zusätzliche Abgasrückführleitung vorgesehen, welche gegebenenfalls das rückzuführende Abgas in den Luftpfad vor den Verdichterteil der zusätzlichen Aufladeeinrichtung einleitet. Zur Einstellung eben der Abgasrückführungsrate kann in dieser zusätzlichen Abgasrückführleitung ein Dosierventil vorgesehen sein.

Um sicherzustellen, dass bei inaktivem Zusatzkreis, bei dem es sich bevorzugt um einen dampfbetriebenen Zusatzkreis handelt, keine Ladeluftrückströmung über den Verdichterteil der zusätzlichen Aufladeeinrichtung auftritt, kann ein Rückschlagventil vor oder nach dem Verdichterteil vorgesehen sein. Ebenso kann ein Rückschlagventil im Luftpfad vor oder nach dem Verdichterteil der ein- oder zweistufig ausgebildeten, bereits vorhandenen Aufladeeinrichtung vorgesehen werden.

Der Vorteil des erfindungsgemäß vorgeschlagenen Konzeptsistdarin zu sehen, dass beispielsweise gegenüber dem aus DE 10 2006 057 247 A1 bekannten Konzept die Motorleistung unbeeinträchtigt bleibt und insbesondere die Abgasrückführung auch dann gewährleistet ist, wenn die Leistung des Zusatzkreises, der insbesondere als Dampfkreis ausgebildet ist, verringert ist, was z.B. während der Warmlaufphase der Verbrennungskraftmaschine der Fall ist. Ebenso kann die Abgasrückführung auch dann noch gewährleistet werden, wenn der Abgasgegendruck auf der Auslassseite durch ein geöffnetes Waste-Gate stromab einer Abladeaufrichtung erheblich abgesenkt ist.

Der Vorteil des erfindungsgemäß vorgeschlagenen Systems gegenüber einem System mit einem oder mehreren konventionellen Aufladeeinrichtungen, so z.B. Abgasturboladern, ist darin zu erblicken, dass der Wirkungsgrad der Verbrennungskraftmaschine aufgrund der Absenkung des Abgasgegendrucks erhöht werden kann und/oder die Abgasrückführrate erhöht wird und damit bereits durch innermotorische Maßnahmen die NOx-Rohemissionen verringert werden, die gegebenenfalls zusätzlich durch eine SCR (selektive katalytische Reduktion)-Einheit im Abgastrakt unter Einsatz einer Harnstofflösung oder einer Harnstoffwasserlösung verringert werden können, was insgesamt eine weitere Absenkung der absoluten NOx-Emissionen nach sich zieht.

### Kurze Beschreibung der Zeichnungen

Anhand der Zeichnung wird die Erfindung nachstehend eingehender beschrieben.

Es zeigt:

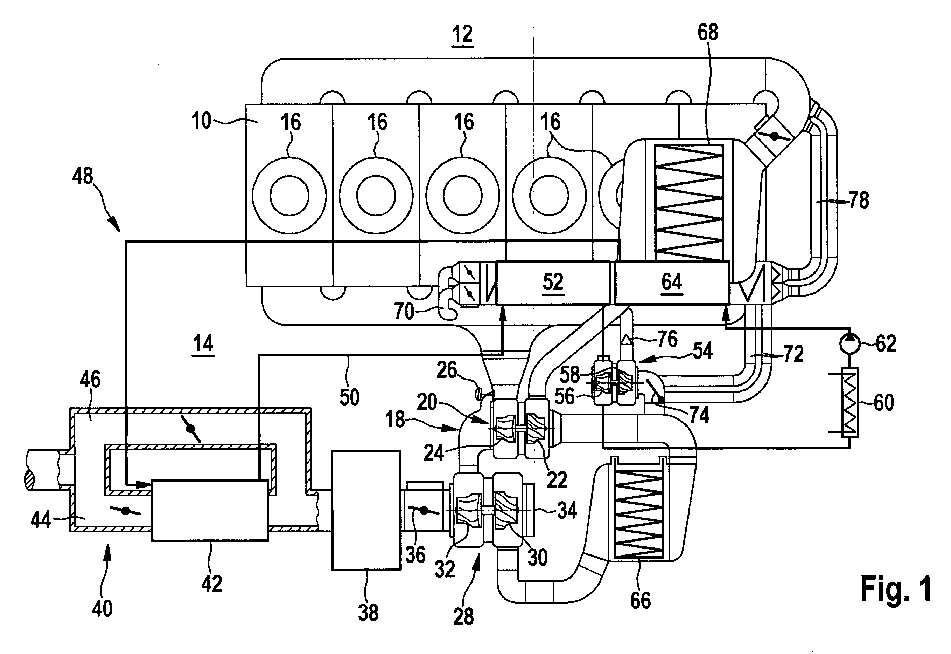

- Figur 1: ein Schema der erfindungsgemäß vorgeschlagenen Vorrichtung zur Unterstützung einer Aufladeeinrichtung bei Verbrennungskraftmaschinen.

### Ausführunasvarianten

Der Darstellung gemäß Figur 1 ist eine Verbrennungskraftmaschine 10 zu entnehmen, die in dieser Ausführungsvariante 6 Zylinder 16 umfasst, und die in Reihenbauweise ausgebildet ist. Das erfindungsgemäß vorgeschlagene Konzept unter Verwendung einer Vorrichtung 48 zur Nutzung von Abwärme einer Verbrennungskraftmaschine 10 ist jedoch nicht auf eine derartige Konfiguration der Verbrennungskraftmaschine 10 in 6-Zylinder-Reihenbauweise beschränkt, sondern umfasst auch 4-Zylinder, 8-Zylinder, 10- oder 12-Zylinder sowie auch Verbrennungskraftmaschinen 10, die eine kleinere Zylinderzahl abweichend von der Reihenbauweise in V-Form oder in Sternform oder dergleichen umfassen.

Eine Einlassseite der Verbrennungskraftmaschine ist durch Bezugszeichen 12 bezeichnet, während eine Auslassseite der Verbrennungskraftmaschine 10 mit Bezugszeichen 14 identifiziert ist.

Der in der Darstellung der Zeichnung dargestellten Verbrennungskraftmaschine 10 ist eine Aufladeeinrichtung 18 zugeordnet. In der in der Zeichnung dargestellten Ausführungsvariante umfasst die Aufladeeinrichtung 18, die insbesondere als Abgasturbolader 18 beschaffen ist, eine Hochdruckstufe 20 sowie eine Niederdruckstufe 28. Damit handelt es sich bei der Aufladeeinrichtung 18 gemäß der Zeichnung um eine zweistufige Aufladeeinrichtung. Die Aufladeeinrichtung 18, die insbesondere als Abgasturbolader ausgebildet ist, kann aber abweichend von der Darstellung gemäß der Zeichnung auch einstufig ausgebildet sein.

Der Zeichnung ist zu entnehmen, dass eine Hochdruckstufe 20 der Aufladeeinrichtung 18 einen Hochdruckverdichterteil 22 sowie einen Hochdruckturbinenteil 24 aufweist. Dem Hochdruckturbinenteil 24 ist ein Waste-Gate 26 zugeordnet, welches mittels eines Stellers betätigbar ist, und mit welchem der Volumenstrom des über den Hochdruckturbinenteil 24 strömenden Abgases und damit der Abgasgegendruck, der auf der Auslassseite 14 der Verbrennungskraftmaschine 10 herrscht, verändert werden kann.

Darüber hinaus umfasst die in der Darstellung gemäß der Zeichnung zweistufig ausgebildete Aufladeeinrichtung die Niederdruckstufe 28, welche der Hochdruckstufe 20 stromab nachgeschaltet ist. Die Niederdruckstufe 28 umfasst einen Niederdruckverdichterteil 30 sowie einen Niederdruckturbinenteil 32. Am Niederdruckturbinenteil 32 befindet sich insbesondere eine Ansaugstelle 34 für Frischluft von der Umgebung. Stromab des Niederdruckturbinenteils 32 der in der Darstellung gemäß der Zeichnung zweistufig ausgebildeten Aufladeeinrichtung 18 befindet sich ein Ventil 36. Dieses in Klappenform ausgebildete Ventil dient der Erhöhung des Wirkungsgrads der Motorbremse. Im Bremsbetrieb kann das klappenförmig ausgebildete Ventil 36 geschlossen werden, wodurch die Verbrennungskraftmaschine gegen einen höheren Abgasgegendruck arbeiten muss.

Im Abgastrakt 40 der Verbrennungskraftmaschine 10 ist darüber hinaus stromab des Ventils 36 eine SCR-Einheit 38 angeordnet. Diese SCR-Einheit (SCR = selektive katalytische Reduktion) reduziert über das Einbringen einer Harnstoff- oder Harnstoffwasserlösung in das Abgas der Verbrennungskraftmaschine 10 die NOx-Anteile, die im Abgas der Verbrennungskraftmaschine 10 enthalten sind zu N₂ und H₂O. Durch die SCR-Einheit 38 im Abgastrakt der Verbrennungskraftmaschine 40 können die in Zukunft zur Erwartung stehenden schärferen Abgasgrenzwerte hinsichtlich einer signifikanten Verringerung des NOx-Anteils im Abgas der Verbrennungskraftmaschine erreicht werden.

Wie der Zeichnung weiterhin zu entnehmen ist, befindet sich im Abgastrakt 40 der Verbrennungskraftmaschine 10 ein Abgaswärmetauscher 42, der Teil eines Zusatzkreises 48 ist. Parallel zum Wärmetauscher 42 befindet sich ein Bypasskanal 46, über den Abgas am Wärmetauscher 42 vorbeigeleitet werden kann. Der Zusatzkreis 48, bei dem es sich insbesondere um einen Dampfkreis handelt, stellt die erfindungsgemäß vorgeschlagene Vorrichtung zur Nutzung der Abwärme der Verbrennungskraftmaschine 10 dar.

Über der Zeichnung entnehmbare Klappen kann der Abgasstrom, der über den Bypasskanal 46 bzw. über den Wärmetauscher 42 geleitet wird, eingestellt werden.

Von einem Abgaswärmetauscher 42, der Wärme aus dem Abgas der Verbrennungskraftmaschine auskoppelt, erstreckt sich eine Zuleitung 50 zu einem ersten Wärmetauscher 52, der einer Abgasrückführung 70 zugeordnet ist. Auf der Auslassseite 14 der Verbrennungskraftmaschine 10 wird das aus den Zylindern 16 der Verbrennungskraftmaschine 10 im Ausschiebetakt jeweils ausgeschobene Abgas in einen Abgaskrümmer geleitet, bevor das Abgas in die Aufladeeinrichtung 18 gelangt, insbesondere in den Hochdruckturbinenteil 24 der in der Zeichnung dargestellten zweistufig ausgebildeten Aufladeeinrichtung, wobei dem Hochdruckturbinenteil 24 besagtes Waste-Gate 26 zugeordnet ist. Am Abgaskrümmer auf der Auslassseite 14 der Verbrennungskraftmaschine 10 befindet sich eine Abzweigstelle, über welche Abgas in die Abgasrückführung 70 eingeleitet wird. Dieser ist der besagte über die Zuleitung 50 beaufschlagte erste Wärmetauscher 52 zugeordnet. Das im Abgaswärmetauscher 42 erhitzte und verdampfte Arbeitsmedium des Zusatzkreises 48, der insbesondere als Dampfkreis ausgebildet ist, wird einerseits durch den Abgaswärmetauscher 42 und andererseits unmittelbar über die heißen aus der Auslassseite 14 der Verbrennungskraftmaschine austretenden Abgase im ersten Wärmetauscher 52 des Abgasrückführungssystems 70 weiter erhitzt. Das erhitzte bzw. überhitzte Arbeitsmedium wird einem Turbinenteil 56 einer Zusatzaufladeeinrichtung 54 zugeleitet, die insbesondere als Abgasturbolader ausgebildet ist und die einen Verdichterteil 58 auf der Frischluftseite antreibt. Das die Expansionsmaschine im Zusatzkreis 48 darstellende Turbinenteil 56 der Zusatzaufladeeinrichtung 54 entspannt das Arbeitsmedium, d.h. den Dampf, welcher in einem der Auslassseite der Expansionsmaschine 56, d.h. dem Turbinenteil nachgeschalteten Kondensator 60 zugeleitet wird, in dem das Arbeitsmedium verflüssigt wird, bevor es über eine dem Kondensator 60 nachgeschaltete Pumpe 62 einem weiteren, zweiten Wärmetauscher 64, der dem Abgasrückführsystem 70 zugeordnet ist, zugeleitet wird. In diesem zweiten Wärmetauscher 64 des Abgasrückführungssystems 70 wird das im flüssigen Zustand vorliegende Arbeitsmedium wieder erhitzt. Zu diesem Zweck wird dem rückgeführten Abgas nach dem Austritt aus dem ersten Wärmetauscher 52 weitere Energie entzogen, wodurch das rückgeführte Abgas weiter abkühlt.

Austrittsseitig gelangt das Arbeitsmedium vom zweiten Wärmetauscher 64 der Abgasrückführung 70 wieder in den Bereich des Abgastraktes 40, wo es in den Abgaswärmetauscher 42 eintritt, um aus dem Abgas im Abgastrakt 40 bzw. aus dem in der ersten Flut 44 strömenden Abgas die Wärme auszukoppeln und das Arbeitsmedium weiter zu erhitzen bzw. zu verdampfen.

Der Frischluftpfad bei der erfindungsgemäß vorgeschlagenen Vorrichtung 48 zur Nutzung der Abwärme einer Verbrennungskraftmaschine 10 stellt sich wie folgt dar. Bei der Darstellung gemäß der Zeichnung handelt es sich um eine Aufladeeinrichtung 18, die zweistufig ausgebildet ist, demnach eine Hochdruckstufe 20 sowie eine Niederdruckstufe 28 umfasst. Aus der Ausführungsvariante gemäß der Zeichnung geht hervor; dass dem Hochdruckturbinenteil 24 das Waste-Gate 26, welches über einen separaten Steller betätigbar ist, zugeordnet ist. Dem Hochdruckturbinenteil 24 ist der Niederdruckturbinenteil 32 der Niederdruckstufe 28 nachgeschaltet. Über dieses wird der Niederdruckverdichterteil 30 angetrieben, der Frischluft aus der Umgebung an der Ansaugstelle 34 ansaugt und in den Ansaugtrakt der Verbrennungskraftmaschine 10 komprimiert. In diesem befindet sich stromab des Niederdruckverdichterteils 30 ein erster Ladeluftkühler 66, welcher der Auskopplung von Wärme aus der vorverdichteten Frischluft dient. Stromab des ersten Ladeluftkühlers 66 befindet sich ein weiterer Abschnitt der Ansaugleitung, über welche vorverdichtete Frischluft dem Hochdruckverdichterteil 22 der Hochdruckstufe 20 zuströmt. Diesem ist über den Zusatzkreis 48, bei dem es sich bevorzugt um einen Dampfkreis handelt, das Verdichterteil 58 parallel geschaltet. Stromab des Verdichterteils 58 der Zusatzaufladeeinrichtung 54 befindet sich ein Rückschlagventil 76, welches bei inaktivem Zusatzkreis 48 eine Ladeluftrückströmung über den Verdichterteil 58 der Zusatzaufladeeinrichtung 54 verhindert, so dass der Ladedruck gehalten werden kann. Die im Hochdruckverdichterteil 22 weiter komprimierte Frischluft sowie die über den Zusatzkreis 58 angetriebenen Verdichterteil 58 der Zusatzaufladeeinrichtung 54 vorverdichtete Luft strömt dem zweiten Ladeluftkühler 68, der in der Ansaugleitung zur Einlassseite 12 der Verbrennungskraftmaschine 10 vorgesehen ist, zu.

Wie aus der Zeichnung weiter hervorgeht, befindet sich vor dem Verdichterteil 58 der Zusatzaufladeeinrichtung 54, die durch den Zusatzkreis 48, bei dem es sich insbesondere um einen Dampfkreis handelt, beaufschlagt ist, ein Dosierventil 74, das am Austritt einer erste zusätzlichen Abgasrückführleitung 72 angeordnet ist. Diese zusätzliche Abgasrückführleitung 72 dient zur Beibehaltung oder Erhöhung der Abgasrückführrate für das rückzuführende Abgas und kann in den Luftpfad vor dem Einlass des Verdichterteils 58 der zusätzlichen Aufladeeinrichtung 54 münden. Die zusätzliche Abgasrückführleitung 72 ist jedoch nicht zwingend erforderlich. Stromab in Bezug auf das Abgas in der Abgasrückführeinrichtung 70 hinter dem zweiten Wärmetauscher 64 des Abgasrückführsystems befindet sich eine serienmäßig bereits vorgesehene Abgasrückführleitung 78, die stromab zweiten Ladeluftkühlers 68 in den Ansaugtrakt der Verbrennungskraftmaschine 10 auf der Einlassseite 12 mündet.

Mit der erfindungsgemäß vorgeschlagenen Lösung lässt sich bei Betätigung des Waste-Gates 26, welches bei der zweistufigen Aufladeeinrichtung 18 gemäß der Zeichnung dem Hochdruckturbinenteil 24 parallel geschaltet ist, der Abgasgegendruck auf der Auslassseite 14 der Verbrennungskraftmaschine 10 absenken, so dass deren Wirkungsgrad durch Verringerung der Ausschiebearbeit im Ausschiebetakt verringert wird. Einhergehend mit der Absenkung des Abgasgegendrucks auf der Auslassseite 14 der Verbrennungskraftmaschine 10 kann mit der erfindungsgemäß vorgeschlagenen Lösung erreicht werden, dass bei Aufrechterhaltung des aufgebauten Ladedrucks weniger oder gar kein Abgas in den Ansaugtrakt zurückgeführt wird. Zur Beibehaltung oder Erhöhung der Abgasrückführrate kann die erste zusätzliche Abgasrückführleitung 72 vorgesehen werden, wobei zur Einstellung der Abgasrückführrate besagtes Dosierventil 74 dient.

Mit der erfindungsgemäß vorgeschlagenen Lösung zur Vorrichtung der Nutzung der Abwärme der Verbrennungskraftmaschine 10 ist der Vorteil gegeben, dass die Leistung der Verbrennungskraftmaschine 10 sowie die Abgasrückführung auch dann gewährleistet ist, wenn die Leistung des Zusatzkreises 48, der insbesondere als Dampfkreis ausgebildet ist, verringert ist, was insbesondere in der Warmlaufphase der Verbrennungskraftmaschine 10 auftritt. Der Vorteil der erfindungsgemäß vorgeschlagenen Vorrichtung 48 zu Nutzung der Abwärme der Verbrennungskraftmaschine 10 liegt des Weiteren darin, dass verglichen mit einem System mit einem oder mehreren konventionellen Aufladeeinrichtung 18 der Wirkungsgrad der Verbrennungskraftmaschine erhöht wird und/oder die Abgasrückführrate beeinflussbar ist, wodurch sich die NOx-Rohemissionen verringern lassen. Eine Verringerung der NOx-Rohemissionen wiederum erlaubt eine weitere Absenkung derselben durch die im Abgastrakt 40 der Verbrennungskraftmaschine angeordnete SCR-Einheit, die zur Reduktion der NOx-Emissionen in N₂ und H₂O im Wege der selektiven katalytischen Reaktion vorgesehen ist. Je geringer der Anteil der NOx-Rohemissionen ist, die im Abgas enthalten sind, welches der SCR-Einheit 38 zugeführt wird, eine desto größere Reduktion derselben kann durch Einbringen von Harnstoff oder einer Harnstoffwasserlösung in besagter SCR-Einheit 38 im Abgastrakt 40 erreicht werden.

In einer weiteren, zeichnerisch jedoch nicht dargestellten vorteilhaften Ausführungsvariante des der Erfindung zugrunde liegenden Konzeptes, kann der Verdichterteil 58 der Zusatzaufladeeinrichtung 54, die in diesem Fall als Dampfkreis beaufschlagter Turbolader ausgebildet ist, mit dem Verdichterteil einer einstufigen Aufladeeinrichtung bzw. mit den Verdichterteilen 22, 30 einer zweistufigen Aufladeeinrichtung 18 in Reihe geschaltet werden.

Die erfindungsgemäß vorgeschlagene Lösung kann in allen Fahrzeugen, bei denen aufgeladene Verbrennungskraftmaschinen 10 zum Einsatz kommen, verwendet werden. Bei den Verbrennungskraftmaschinen 10 kann es sich um Ottomotoren, Dieselmotoren oder auch um gasbetriebene Motoren handeln, die mit einer Vorrichtung 48 zur Nutzung von Abwärme der Verbrennungskraftmaschine ausgestattet sind.

## Patentansprüche

1. Vorrichtung (48) zur Nutzung der Abwärme einer Verbrennungskraftmaschine (10), die eine ein- oder mehrstufige Aufladeeinrichtung (18; 20, 28) umfasst, die insbesondere als Abgasturbolader ausgeführt ist, wobei der ein- oder mehrstufig ausgeführten Aufladeeinrichtung (18; 20, 28) eine weitere, zusätzliche Aufladeeinrichtung (54) zugeordnet ist, die eine durch einen Zusatzkreis (48), insbesondere einen Dampfkreis, beaufschlagte Expansionsmaschine (56) umfasst, wobei die Expansionsmaschine (56) ein Verdichterteil (58) antreibt, welches mindestens einem Verdichterteil (24, 30) der ein- oder mehrstufig ausgeführten Aufladeeinrichtung (18; 20, 28) parallel oder zu diesem in Reihe geschaltet ist, **dadurch gekennzeichnet, dass** der Verbrennungskraftmaschine (10) auf der Auslassseite (14) eine Abgasrückführungseinrichtung (70) zugeordnet ist, wobei der Abgasrückführung stromab einer Abzweigstelle ein erster Wärmetauscher (52) zugeordnet ist, der Wärme aus dem Abgas der Verbrennungskraftmaschine (10) aus- und in das Arbeitsmedium, insbesondere Dampf, des Zusatzkreises (48) vor der zusätzlichen Aufladeeinrichtung (54) einkoppelt.

2. Vorrichtung (48) gemäß Anspruch 1, **dadurch gekennzeichnet, dass** insbesondere bei einer zweistufigen Aufladeeinrichtung (18; 20, 28) das Verdichterteil (58) der zusätzlichen Aufladeeinrichtung (54) dem HochdruckVerdichterteil (22) der Hochdruckstufe (20) parallel oder dieser in Reihe geschaltet ist.

3. Vorrichtung (48) gemäß Anspruch 1, **dadurch gekennzeichnet, dass** die ein- oder mehrstufige Aufladeeinrichtung (18; 20, 28) ein Waste-Gate (26) umfasst, mit dem der Abgasgegendruck auf der Auslassseite (14) der Verbrennungskraftmaschine (10) zu beeinflussen ist.

4. Vorrichtung (48) gemäß Anspruch 1, **dadurch gekennzeichnet, dass** dem Zusatzkreis (48) ein zweiter Wärmetauscher (64) zugeordnet ist, welcher Wärme aus dem rückgeführten Abgas nach Durchströmen des ersten Wärmetauschers (52) in das Arbeitsmedium, insbesondere Dampf, des Zusatzkreises (48) einkoppelt.

5. Vorrichtung (48) gemäß Anspruch 1, **dadurch gekennzeichnet, dass** rückzuführendes Abgas über eine erste zusätzliche Abgasrückführleitung (72) in den Luftpfad vor dem Verdichterteil (58) der zusätzlichen Aufladeeinrichtung (54) zugeführt wird.

6. Vorrichtung (48) gemäß Anspruch 5, **dadurch gekennzeichnet, dass** in der ersten zusätzlichen Abgasrückführleitung (72) ein Dosierventil (74) angeordnet ist.

7. Vorrichtung (48) gemäß Anspruch 5, **dadurch gekennzeichnet, dass** vor oder nach dem Verdichterteil (58) der zusätzlichen Aufladeeinrichtung (54) oder vor oder nach dem mindestens einen Verdichterteil (22, 30) der ein- oder mehrstufigen Aufladeeinrichtung (18) ein Rückschlagventil (76) eingebaut ist.

## Claims

1. Device (48) for utilizing the waste heat of an internal combustion engine (10) which comprises a single-stage or multi-stage supercharging device (18; 20, 28) which is in particular in the form of an exhaust-gas turbocharger, wherein the single-stage or multi-stage supercharging device (18; 20, 28) is assigned a further, additional supercharging device (54) which comprises an expansion machine (56) acted on by an auxiliary circuit (48), in particular by a steam circuit, wherein the expansion machine (56) drives a compressor part (58) which is connected in parallel or in series with at least one compressor part (24, 30) of the single-stage or multi-stage supercharging device (18; 20, 28), **characterized in that** the internal combustion engine (10) is assigned, on the outlet side (14), an exhaust-gas recirculation device (70), wherein the exhaust-gas recirculation arrangement is assigned, downstream of a branching point, a first heat exchanger (52) which couples heat out of the exhaust gas of the internal combustion engine (10) and couples said heat into the working medium, in particular steam, of the auxiliary circuit (48) upstream of the additional supercharging device (54).

2. Device (48) according to Claim 1, **characterized in that**, in particular in the case of a two-stage supercharging device (18; 20, 28), the compressor part (58) of the additional supercharging device (54) is connected in parallel or in series with the high-pressure compressor part (22) of the high-pressure stage (20).

3. Device (48) according to Claim 1, **characterized in that** the single-stage or multi-stage supercharging device (18; 20, 28) comprises a wastegate (26) by means of which the exhaust-gas back pressure on the outlet side (14) of the internal combustion engine (10) can be influenced.

4. Device (48) according to Claim 1, **characterized in that** the auxiliary circuit (48) is assigned a second heat exchanger (64) which couples heat out of the recirculated exhaust gas, after the latter has flowed through the first heat exchanger (52), and couples said heat into the working medium; in particular steam, of the auxiliary circuit (48).

5. Device (48) according to Claim 1, **characterized in that** exhaust gas to be recirculated is fed via a first additional exhaust-gas recirculation line (72) into the air path upstream of the compressor part (58) of the additional supercharging device (54).

6. Device (48) according to Claim 5, **characterized in that** a dosing valve (74) is arranged in the first additional exhaust-gas recirculation line (72).

7. Device (48) according to Claim 5, **characterized in that** a check valve (76) is installed upstream or downstream of the compressor part (58) of the additional supercharging device (54) or upstream or downstream of the at least one compressor part (22, 30) of the single-stage or multi-stage supercharging device (18).

## Revendications

1. Dispositif (48) pour utiliser la chaleur perdue d'un moteur à combustion interne (10), qui comprend un dispositif de suralimentation à un ou plusieurs étages (18 ; 20, 28), qui est réalisé notamment sous forme de turbocompresseur à gaz d'échappement, au dispositif de suralimentation réalisé à un ou plusieurs étages (18 ; 20, 28) étant associé un autre dispositif de suralimentation supplémentaire (54) qui comprend une machine d'expansion (56) sollicitée par un circuit supplémentaire (48), en particulier un circuit de vapeur, la machine d'expansion (56) entraînant une partie de compresseur (58) qui est montée en série ou en parallèle avec une partie de compresseur (24, 30) du dispositif de suralimentation réalisé à un ou plusieurs étages (18 ; 20, 28), **caractérisé en ce qu'**au moteur à combustion interne (10) est associé du côté de la sortie (14) un dispositif de recirculation de gaz d'échappement (70), la recirculation des gaz d'échappement étant associée en aval d'un point de branchement à un premier échangeur de chaleur (52) qui extrait la chaleur provenant des gaz d'échappement du moteur à combustion interne (10) et l'injecte dans le fluide de travail, en particulier la vapeur du circuit supplémentaire (48), en amont du dispositif de suralimentation supplémentaire (54).

2. Dispositif (48) selon la revendication 1, **caractérisé en ce qu'**en particulier dans le cas d'un dispositif de suralimentation à deux étages (18 ; 20, 28), la partie de compresseur (58) du dispositif de suralimentation supplémentaire (54) est montée en parallèle ou en série avec la partie de compresseur haute pression (22) de l'étage haute pression (20).

3. Dispositif (48) selon la revendication 1, **caractérisé en ce que** le dispositif de suralimentation à un ou plusieurs étages (18 ; 20, 28) comprend une soupape de décharge (26) avec laquelle la contre-pression des gaz d'échappement du côté de la sortie (14) du moteur à combustion interne (10) peut être influencée.

4. Dispositif (48) selon la revendication 1, **caractérisé en ce qu'**au circuit supplémentaire (48) est associé un deuxième échangeur de chaleur (64) qui injecte la chaleur provenant des gaz d'échappement recirculés après le passage à travers le premier échangeur de chaleur (52) dans le flux de travail, en particulier la vapeur du circuit supplémentaire (48).

5. Dispositif (48) selon la revendication 1, **caractérisé en ce que** le gaz d'échappement à recirculer est acheminé par le biais d'une première conduite de recirculation de gaz d'échappement supplémentaire (72) dans le chemin d'air en amont de la partie de compresseur (58) du dispositif de suralimentation supplémentaire (54).

6. Dispositif (48) selon la revendication 5, **caractérisé en ce qu'**une soupape de dosage (74) est disposée dans la première conduite de recirculation des gaz d'échappement supplémentaire (72).

7. Dispositif (48) selon la revendication 5, **caractérisé en ce qu'**en amont ou en aval de la partie de compresseur (58) du dispositif de suralimentation supplémentaire (54) ou en amont ou en aval de l'au moins une partie de compresseur (22, 30) du dispositif de suralimentation à un ou plusieurs étages (18), est incorporé un clapet antiretour (76).
